# EUROPEAN PATENT APPLICATION

(11) **EP 1 610 574 A1**
(43) Date of publication of application: **28.12.2005**
(21) Application number: 05253713.1
(22) Date of filing: 15.06.2005
(51) Int. Cl.: H04Q 7/36

(54) **Partitioning method for mobile communication network with overlapping location areas**

(30) Priority: 25.06.2004 US 582544 P
(71) Applicant: Groundhog Technologies Inc., Cambridge, MA 02142 (US)
(72) Inventor: Chen, Meng-Seng Grounding Technologies Inc., Cambridge Massachusetts 02142 (US)
(74) Representative: Pratt, David Martin

(57) **Abstract**

A partitioning method for a mobile communication network with overlapping location areas is disclosed. The method comprises: finding at least a potential LAC labeling operation for each cell within the network; determining a respective gain for each potential LAC labeling operation; selecting one potential LAC labeling operations according to the respective gains; and adjusting the LAC list of the cell according to the selected operation. The method can provide an optimal partitioning to upgrade the network performance.

## Description

### BACKGROUND OF INVENTION

### 1. FIELD OF THE INVENTION

The present invention generally relates to a network planning method used in a mobile communication network, and more particularly, relates to a partitioning method for a mobile communication network with overlapping location areas.

### 2. DESCRIPTION OF THE PRIOR ART

In a multi-cell mobile communication network such as GSM network, each cell represents the radio range of a base station therein. Mobile units move among the cells. One or more cells are grouped into a location area. Each cell within a location area is assigned a location area code (LAC). The network provides a register for each mobile unit to record the LAC of the location area where the mobile unit is currently located. When moving form a previous location area to a new one, a mobile unit performs a location update to change its LAC to that of the new location area. Also, when a call is initiated to a specific mobile unit, the network pages all mobile units in a specific location area according to the last location update performed by that specific mobile unit. Through applying this location area scheme, the network needn't track and page all mobile units when a call is initiated. The load of the network can be greatly reduced.

However, in some situations, the location update load of the network may be increased to damage the network performance. For example, if a mobile unit moves back and forth between two location areas, a lot of redundant location updates will occur. This phenomenon is called a ping-pong effect, which will greatly increase the location update load.

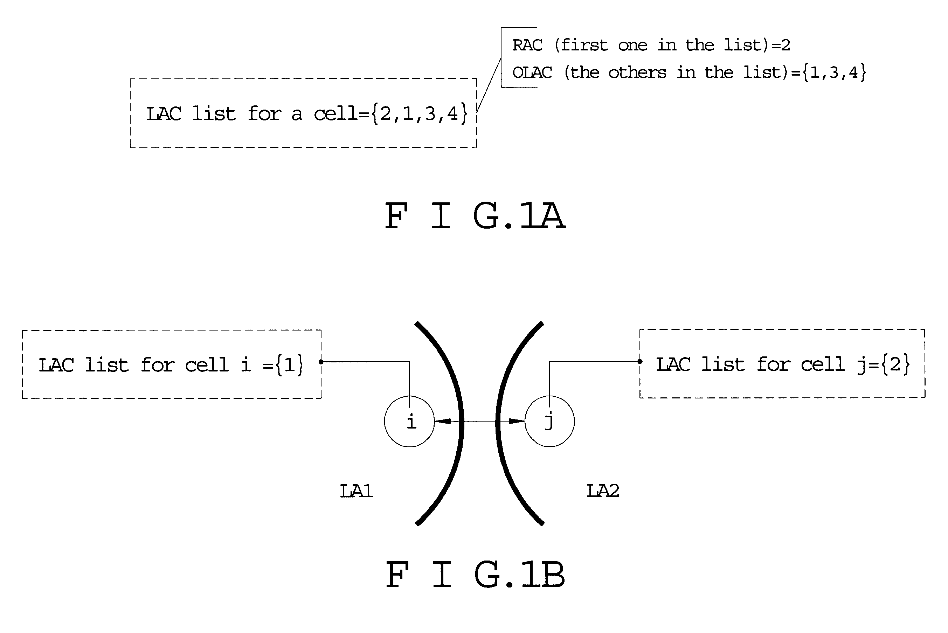

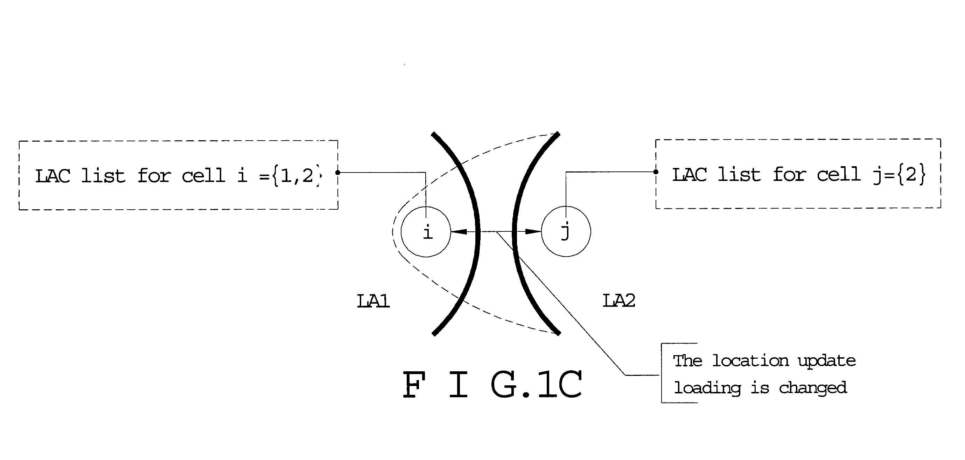

The overlapping location area scheme, in which one cell may belong to two or more location areas, is developed to reduce the location update load of the network. In the overlapping location area scheme, each cell has a corresponding LAC list, as shown in Fig.1A. The first one of the LAC list is called a registration area code (RAC), and the others are called overlapping location area codes (OLAC). When a mobile unit moves into a cell, the mobile unit does not required to perform a location update if its current LAC is the same with any LAC (RAC or OLAC) in the LAC list of the cell. Otherwise, a location update is required and the LAC in the mobile unit is changed to the RAC in the list of the cell.

When adding an OLAC into the LAC list of a cell, the distribution for mobile units with each respective LAC within the cell (called LAC distribution in this specification) can be changed. Also, the location update load for the cell is changed since not all mobile units moving into the cell will trigger a location update. Fig.1B and 1C show the statuses before and after adding the OLAC into the LAC list respectively. The bold lines in Fig.1B represent the boundaries of location areas 1 and 2 (denoted as LA 1 and LA2), and cells i and j belong to LA1 and LA2 respectively. All mobile units in cell i contains LAC 1 and all mobile units in cell j contains LAC 2. The location update load for cell i depends on the times of mobile units moving from cell j to cell i. However, after adding LAC 2 into cell i, the boundary of LA2 is extended (the dotted line in Fig. 1C) to overlap LA1, and the LAC distribution of cell i is also changed since the mobile unit therein may contains LAC 1 or LAC 2. At this time, all mobile units moving into cell i from cell j will not trigger a location update, and thus the location update load for cell i will also be changed.

By applying overlapping location area scheme, the location update load for the network may be reduced. However, paging load can be increased too. In this condition, the overall load of the network may not be decreased.

### SUMMARY OF INVENTION

It is therefore an objective of the present invention to provide a partitioning method for a mobile communication network with overlapping location areas, thereby providing an optimal partitioning to upgrade the network performance.

Another objective of the present invention is to provide a method for determining a location area code (LAC) list of a cell in a mobile communication network, thereby minimizing location update load and keeping the network under paging load limit.

Another objective of the present invention is to provide a method for predicting a LAC distribution for a cell in a mobile communication network with overlapping location areas, thereby providing a systematic and accurate way to predict the LAC distribution for the cell.

According to one embodiment of the present invention, the method for determining a LAC list of a cell in a mobile communication network includes the following steps: finding at least a potential LAC labeling operation for the cell; determining a respective gain for each potential LAC labeling operation; selecting one of the potential LAC labeling operations according to the respective gains; and adjusting the LAC list according to the selected operation.

According to another embodiment of the present invention, the partitioning method for a mobile communication network with overlapping location areas applies the method for determining the LAC list mentioned above to each cell in the network.

According to another embodiment of the present invention, the method for predicting a LAC distribution of a cell in a mobile communication network with overlapping location areas includes the following steps: (a) determining a respective contribution to each LAC of the cell provided by a neighboring cell of the cell according to signal movements from the neighboring cell to the cell and an initial LAC distribution of the neighboring cell; (b) repeating step (a) for other neighboring cells of the cell; and (c) predicting the LAC distribution of the cell according to the contributions provided by the neighboring cells.

### BRIEF DESCRIPTION OF THE DRAWINGS

FIG.1A is a diagram showing the LAC list for a cell in the overlapping location area scheme.
FIG.1B and 1C are diagrams showing the statuses before and after adding an OLAC into the LAC list respectively.
Fig.2 is a flow chart of a preferred embodiment of the partitioning method for a mobile communication network with overlapping location areas according to the present invention.
Fig.3A and 3B illustrate the LAC distributions of cell i and its neighboring cells before and after applying a LAC labeling operation to cell i respectively.
Fig.4 is a diagram showing the calculation of the LAC paging contribution.
Fig.5 is a flow chart of a preferred embodiment of the method for predicting a LAC distribution of a cell in a mobile communication network with overlapping location areas according to the present invention.
Fig.6 illustrates an example of calculation of the LAC distribution for cell i.

### DETAILED DESCRIPTION

It should be noted that the term of location area is used specifically for the GSM network. However, it is also known as Paging Area, Routing Area, or Registration Area used for different mobile communication networks. For example, "Location Area" is typically used in GSM network and "Routing Area" is typically used in GPRS network. Also, "Registration Area" and "Paging Area" are generally used in many communication systems. Although their names are different, people skilled in the art know that their meanings are substantially the same, i.e., updating messages are required when moving across the boundary of location area (or routing area, or registration area) and mobile units are paged in their current location area (or routing area, or registration area). Similarly, the term of location area code (LAC) is also used specifically for the GSM network, and people skilled in the art know that its meaning is substantially the same to the like terms used in other kinds of mobile networks. The GSM network is used as an example in this specification, while the present invention is not limited to the GSM network.

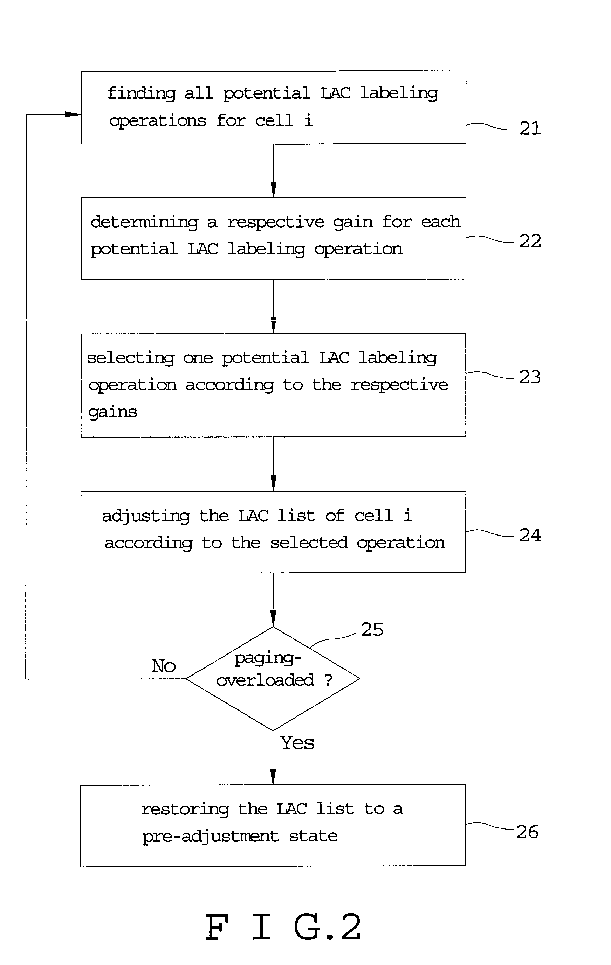

Fig.2 is a flow chart of a preferred embodiment of the partitioning method for a mobile communication network with overlapping location areas according to the present invention. In the preferred embodiment, the mobile communication network is a GSM network, and to do partitioning is to determine a LAC list for each cell in the GSM network. The LAC list at least contains a registration area code (RAC) and may include one or more overlapping location area codes (OLAC). For each cell (e.g. cell i) in the network, the flow in Fig.2 performs steps of:
- 21: finding all potential LAC labeling operations for cell i;
- 22: determining a respective gain for each potential LAC labeling operation;
- 23: selecting one potential LAC labeling operation according to the respective gains;
- 24: adjusting the LAC list of cell i according to the selected operation;
- 25: determining whether at least a second portion of the network is paging-overloaded, if no then jumping to step 21; otherwise proceeding to step 26; and
- 26: restoring the LAC list to a pre-adjustment state.

In step 21, the potential LAC labeling operation is an Add operation, Replace operation, Swap operation, or Remove operation. These operations are used to adjust the LAC list of a cell, and illustrated in Table 1 below. The Add operation adds an OLAC into the LAC list, while the Remove operation removes an OLAC from the LAC list. The Replace operation replaces the RAC of the LAC list with the RAC of any neighboring cell. The Swap operation replaces the RAC of the LAC list with the RAC of any neighboring cell, and puts the old RAC as an OLAC into the LAC list. The Replace and Swap operations are mainly applied to modify RAC of the LAC list for a cell.

**Table 1**

| **Operation** | **Adjustment in LAC list** | **Examples** |
|---|---|---|
| **Add** | Add an OLAC into LAC list of a cell. | {1}→{1,2} |
| **Replace** | Replace RAC with RAC of any neighboring cell. | {1,3}→ {**2**,3} or {**1**,2}→{**2**} |
| **Swap** | Replace RAC with RAC of any neighboring cell, and put the old RAC as an OLAC into the LAC list. | {**1**,2,3}→{**3**,2,**1**} |
| **Remove** | Remove an OLAC from LAC list of a cell. | {1,**2**}→{1} |

According to the current LAC lists of cell i and all its neighboring cells, the "potential" LAC labeling operations for cell i can be found. Each LAC (including RAC and OLAC) in the LAC list of any neighboring cell and not in that of cell i can be a candidate to be added into the list of cell i. Each OLAC in the LAC list of cell i can be removed. The RAC of any neighboring cell, if different from that of cell i, can be a candidate for swapping and replacing. In this manner, all the potential LAC labeling operations for cell i can be found in step 21.

In another embodiment, in step 21, a potential LAC labeling operation can be found according to any possible configuration of the LAC list of cell i. That is, for each possible configuration, there is a corresponding LAC labeling operation for adjusting the current LAC list to the possible configuration. The LACs (including RAC and OLAC) in any possible configuration are selected from the current LAC lists of cell i and all its neighboring cells.

After finding all the potential operations for cell i, step 22 is executed to determine a respective gain for each potential operation. The gain represents the benefit of applying the corresponding potential operation to cell i. Different operations may lead to different gain values. In the embodiment of Fig.2, the gain is determined by comparing location update load of some portion (denoted by first portion) or the entire GSM network before and after applying the corresponding LAC labeling operation. The scope of the first portion, which may include cell i, can be adjusted according to realistic conditions of the GSM network.

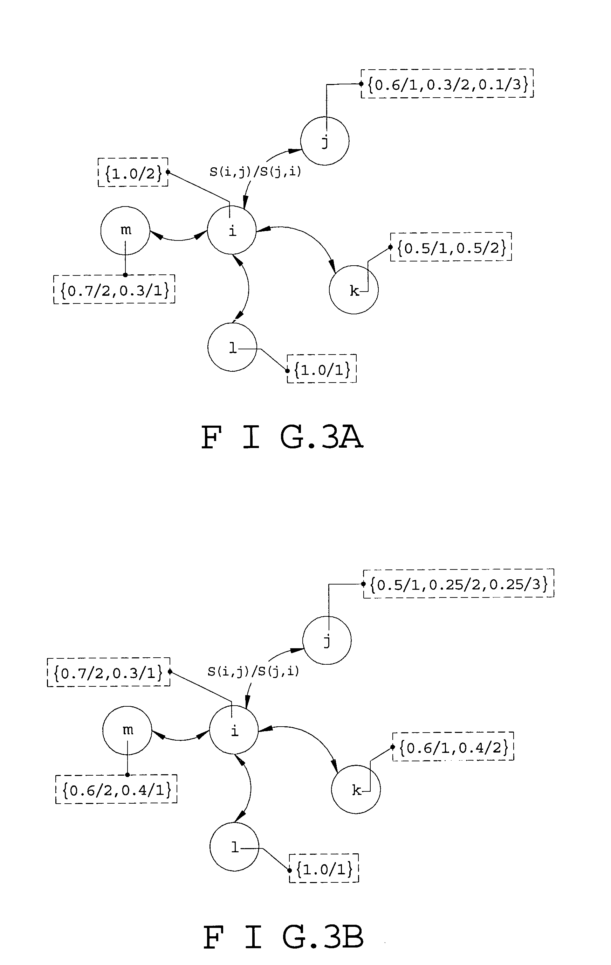

The location update load of the first portion/entire GSM network is determined by accumulating respective location update load for each cell therein. The location update load for a cell is calculated based on the signal movements between the cell and its neighboring cells, as well as the current LAC distributions of the cell and its neighboring cells. The signal movement from a cell to a neighboring means that a mobile unit moves from the cell to the neighboring cell, or the medium via which the mobile unit connects with the network is changed from the cell to the neighboring cell. Fig.3A illustrates the LAC distributions of cell i and its neighboring cells (cell j, k, l, m) before applying a LAC labeling operation to cell i. In Fig.3A, S(j,i) represents the signal movements from cell j to cell i, and {0.6/1,0.3/2,0.1/3} represents the LAC distribution of cell j. The element, 0.6/1, depicts the probability for mobile units with LAC 1 in cell j, and 0.6 is called a distributed value of LAC 1. The location update from cell j to cell i is represented as S(j,i)*P(j,i), where P(j,i) stands for the probability for the signal movements from cell j to cell i bringing about the location update. According to the LAC distributions of cell j and cell i, the probability P(j,i) is calculated as 0.7, which is the summation of 0.6 from LAC 1 and 0.1 from LAC 3 in the LAC distribution of cell j. It means that 70% signal movements from cell j to cell i trigger the location update. Then, the location update load for cell i, denoted by B(i), can be figured out by the summation of location updates from all its neighboring cells to cell i as shown in Fig.3A. Accordingly, the total location update load for the first portion/entire network, denoted by B, can be figured out by the summation of the location update load for each cell in the first portion/entire network.

As mentioned above, the LAC distribution of a cell is changed after applying a LAC labeling operation to the cell. The LAC distributions of the neighboring cells will also be changed correspondingly. The method for predicting the new LAC distribution of the cell will be disclosed later. Fig.3B illustrates the new LAC distributions of cell i and its neighboring cells after applying a LAC labeling operation to cell i, wherein the operation adds an OLAC 1 to cell i. Since the LAC distributions of cell i and its neighboring cells are changed (while the signal movements between cell i and its neighboring cells remain unchanged), the location update load for cell i needs a re-calculation in the same manner mentioned above. Then, the new location update load for cell i, denoted by A(i), is the summation of location updates from all its neighboring cells to cell i as shown in Fig.3B. Similarly, the new total location update load for the first portion/entire network, denoted by A, can be figured out by the summation of the new location update load for each cell in the first portion/entire network.

Then, the corresponding gain for the LAC labeling operation in Fig.3B can be computed by B-A, i.e. the difference between B and A. That is, the gain represents the benefit, i.e. the decrease of location update load, for the first portion/entire network after the LAC labeling operation is applied to cell i.

After the respective gain for each potential operation for cell i is determined in step 22, step 23 selects a potential operation with the maximum gain and step 24 applies the selected operation to adjust the LAC list of cell i. In another embodiment, step 23 selects the potential operation with a gain larger than a predetermined threshold. This means the operation with a lower gain (e.g. negative gain) will not be selected.

However, the adjustment of the LAC list should not result in a paging overload in the network. Thus, step 25 checks if some portion (denoted by second portion) or the entire network is paging-overloaded. If any cell or location area, which is assigned a paging load limit, within the second portion/entire network is paging-overloaded, then the second portion/entire network is determined as paging-overloaded. In one embodiment, the second portion corresponds to the first portion mentioned earlier. Further, if the second portion/entire network is paging-overloaded, which means the adjustment made by step 24 is not proper, then step 26 restores the LAC list of cell i to a previous state before step 24 is performed (i.e. the pre-adjustment state). On the other hand, if the second portion/entire network is not overloaded, then the flow of Fig.2 jumps back to step 21 to start next round of adjustment. The flow will be repeated again until no qualified potential LAC labeling operation can be selected for cell i.

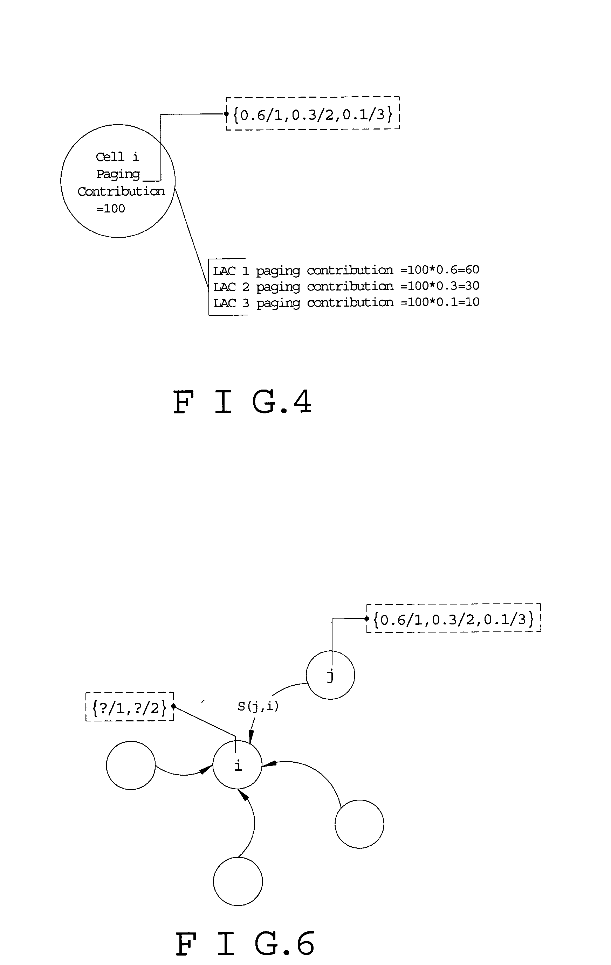

It is notable that the paging contribution made by a cell, which means the number of paging generated due to the mobile units in the cell during a period of time, can be divided into several LAC paging contributions according to the LAC distribution of the cell. Fig.4 illustrates the calculation of each LAC paging contribution of cell i. The LAC distribution of cell i is {0.6/1, 0.3/2, 0.1/3}, which means that there are 60% mobile units in cell i carrying LAC 1, 30% carrying LAC 2, and 10% carrying LAC 3. Therefore, if the paging contribution made by cell i is 100, then the paging contributions of LAC 1, LAC 2, and LAC 3 are 60 (100*0.6), 30 (100*0.3), and 10 (100*0.1) respectively. Based on this, the paging load of a cell can be estimated. For each LAC in the cell, the respective LAC paging contribution made by each cell within the location area with the LAC can be added up to generates a total paging of the LAC. Then, the paging load of the cell is estimated as the sum of the total paging of each LAC in the cell. For example, the paging load of cell i in Fig.4 is the sum of the total pagings of LAC 1, LAC 2, and LAC 3.

In another preferred embodiment of the partitioning method, a network partitioning algorithm is applied to the GSM network prior to step 21. The network partitioning algorithm can generate a plurality of non-overlapping location areas. In this preferred embodiment, the RAC of each non-overlapping location area is first determined by the network partitioning algorithm, and then the OLAC is added (or removed) to generate the optimized overlapping location area by the flow of Fig.2. Thus, in step 21, only Add operation and Remove operation are considered.

The applicable network partitioning algorithms include, but are not limited to, K-L (Kernighan-Lin) algorithm, greedy algorithm, F-M (Fiduccia-Mattheyses) algorithm, genetic algorithm, and simulated annealing algorithm. For information on K-L algorithm, please refer to "An Efficient Heuristic Procedure for Partitioning Graphs" (The Bell system technical journal, 49(1):291-307, 1970). For information on greedy algorithm, please refer to "Introduction to Algorithms: A Creative Approach, chapter 7" (pp.210.about.pp.211, Addison-Wesley Publishing Company, 1989). For information on F-M algorithm, please refer to "A Linear-Time Heuristic for Improving Network Partitions" (Proc. of DAC, 1982). For information on genetic algorithm, please refer to "A Genetic Algorithm For Optimizing Multiple Part Placement To Reduce Build Time" (Proceedings of the Fifth International Conference on Rapid Prototyping, Dayton, Ohio, June 1994). For information on simulated annealing algorithm, please refer to "Location Area Planning in Cellular Networks Using Simulated Annealing" (Proceedings of IEEE Infocom, The Conference on Computer Communications 2001, Anchorage, Ak., Apr. 22-26, 2001). The above-mentioned publications are incorporated herein by reference.

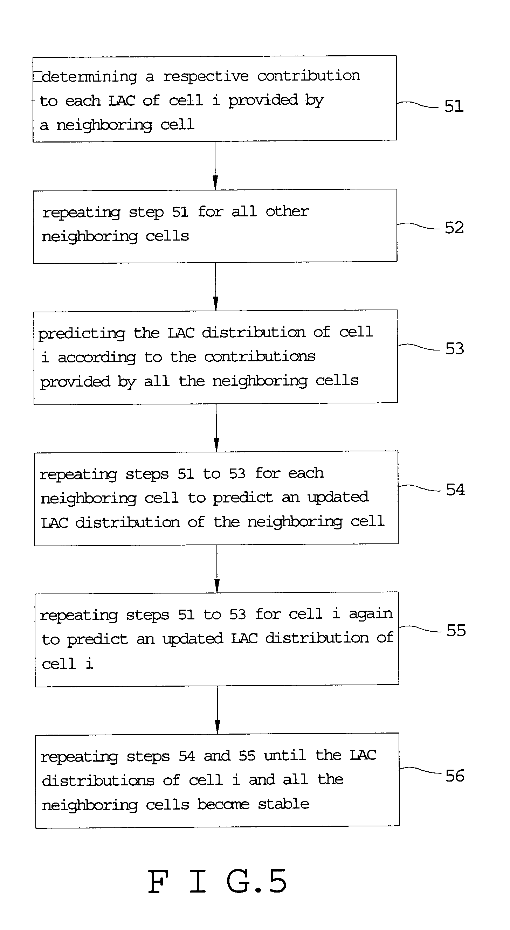

As mentioned above, after applying a potential LAC labeling operation to a cell, the LAC distribution of the cell should be re-determined in order to compute the new location update load for the cell. A preferred embodiment of the method for predicting the LAC distribution of the cell is shown in Fig 5. The preferred embodiment is performed after a LAC labeling operation is applied to cell i in the network. As shown in Fig.5, the flow comprises steps of:
- 51: determining a respective contribution to each LAC of cell i provided by a neighboring cell of cell i according to signal movements from the neighboring cell to cell i and an initial LAC distribution of the neighboring cell;
- 52: repeating step 51 for all other neighboring cells;
- 53: predicting a LAC distribution of cell i according to the contributions provided by all the neighboring cells;
- 54: repeating steps 51 to 53 for each neighboring cell to predict an updated LAC distribution of the neighboring cell, wherein the predicted LAC distribution of cell i is used as the initial LAC distribution of cell i;
- 55: repeating steps 51 to 53 for cell i again to predict an updated LAC distribution of cell i, wherein the updated LAC distribution of the neighboring cell is used as the initial LAC distribution of the neighboring cell; and
- 56: repeating steps 54 and 55 until the LAC distributions of cell i and all the neighboring cells approach to a stable state.

In step 51, if a LAC of the neighboring cell is also labeled to cell i, then the respective contribution to the LAC of cell i provided by the neighboring cell is computed as the product of the signal movements from the neighboring cell to cell i and a distributed value of the LAC in the initial LAC distribution of the neighboring cell. On the other hand, if the LAC is not labeled to cell i, then when a mobile unit carrying the LAC moves from the neighboring cell to cell i, the LAC in the mobile unit is replaced by a default LAC, i.e. RAC, of cell i. Thus, the respective contribution to the RAC of cell i provided by the neighboring cell will contain the product of the signal movements from the neighboring cell to cell i and a distributed value of the LAC in the initial LAC distribution of the neighboring cell.

In step 53, the distributed value of each LAC (RAC or OLAC) in the new LAC distribution of cell i is determined by accumulating the contributions to the LAC provided by all neighboring cells of cell i, and the new LAC distribution of cell i is then generated.

However, the new LAC distribution of cell i will change the LAC distributions of its neighboring cells. Thus, steps 54 to 56 are repeated until all the predicted LAC distributions of cell i and its neighboring cells approach to a stable state. Here the stable state means the difference between the previous and following LAC distributions is smaller than a threshold, which can be determined according to the realistic conditions of network operation.

Fig.6 illustrates an example of calculation of the LAC distribution for cell i. In Fig.6, S(j,i) represents the signal movements from cell j to cell i, {0.6/1,0.3/2,0.1/3} represents the LAC distribution of cell j, and {?/1,?/2} represents the LAC distribution to be figured out for cell i. When a mobile unit with LAC 3 in cell j moves to cell i, its LAC changes to LAC 1 since LAC 3 is not included in cell i. Therefore, the contribution to LAC 1 of cell i provided by cell j is S(j,i)*(0.6+0.1). In addition, the contribution to LAC 2 from cell j is S(j,i)*0.3. Based on the contributions to each LAC of cell i from all neighboring cells, the LAC distribution of cell i can be determined. For example, if the contributions to LAC 1 and LAC 2 of cell i from all the neighboring cells total 100 and 60 respectively, then the distributed values of LAC 1 and LAC 2 become 100/(100+60) and 60/(100+60), that is, the new LAC distribution of cell i is determined as {0.625/1,0.375/2}.

While the present invention has been shown and described with reference to the preferred embodiments thereof and in terms of the illustrative drawings, it should not be considered as limited thereby. Various possible modifications and alterations could be conceived of by one skilled in the art to the form and the content of any particular embodiment, without departing from the scope and the spirit of the present invention.

## Claims

1. A method for determining a location area code (LAC) list of a first cell in a mobile communication network, comprising following steps:
finding at least a potential LAC labeling operation for the first cell;
determining a respective gain for each potential LAC labeling operation;
selecting one of the potential LAC labeling operations according to the respective gains; and
adjusting the LAC list according to the selected potential LAC labeling operation.

2. The method of claim 1, prior to the finding step further comprising:
applying a network partitioning algorithm to the mobile communication network.

3. The method of claim 1, wherein the potential LAC labeling operation is one of Add operation, Replace operation, Swap operation, and Remove operation.

4. The method of claim 1, wherein the potential LAC labeling operation is found according to a possible configuration of the LAC list.

5. The method of claim 1, wherein the gain corresponds to at least a first portion of the mobile communication network, and is determined by comparing location update load of the first portion before and after applying the potential LAC labeling operation to the first cell.

6. The method of claim 1, after the adjusting step further comprising:
determining whether at least a second portion of the mobile communication network is paging-overloaded; and
restoring the LAC list to a pre-adjustment state if the second portion is paging-overloaded.

7. The method of claim 1, wherein a paging load of the first cell is estimated according to a total paging of each LAC in the LAC list, wherein the total paging of each LAC is generated according to a respective paging contribution of the LAC made by each cell within a location area with the LAC.

8. A method for predicting a location area code (LAC) distribution of a first cell in a mobile communication network with overlapping location areas, comprising following steps:
(a) determining a respective contribution to each LAC of the first cell provided by a neighboring cell of the first cell according to signal movements from the neighboring cell to the first cell and an initial LAC distribution of the neighboring cell;
(b) repeating the step (a) for each of other neighboring cells of the first cell; and
(c) predicting the LAC distribution of the first cell according to the contributions provided by the neighboring cells of the first cell.

9. The method of claim 8, wherein the step (a) comprises:
if a LAC of the neighboring cell is also labeled to the first cell, the respective contribution to the LAC of the first cell provided by the neighboring cell comprises a product of the signal movements from the neighboring cell to the first cell and a distributed value of the LAC in the initial LAC distribution of the neighboring cell; and
if a LAC of the neighboring cell is not labeled to the first cell, the respective contribution to a default LAC of the first cell provided by the neighboring cell comprises a product of the signal movements from the neighboring cell to the first cell and a distributed value of the LAC in the initial LAC distribution of the neighboring cell.

10. The method of claim 8, wherein in the step (c), a distributed value of a LAC in the LAC distribution of the first cell is determined by accumulating the contributions to the LAC provided by the neighboring cells of the first cell.

11. The method of claim 8, further comprising:
(d) repeating the steps (a) to (c) for each neighboring cell to predict an updated LAC distribution of the neighboring cell according to the predicted LAC distribution of the first cell;
(e) repeating the steps (a) to (c) for the first cell again to predict an updated LAC distribution of the first cell according to the updated LAC distribution of the neighboring cell; and
(f) repeating the steps (d) and (e) until the LAC distributions of the first cell and the neighboring cells approach to a stable state.

12. A partitioning method for a mobile communication network with overlapping location areas comprising the method of claim 1, wherein the method of claim 1 is applied to each cell in the mobile communication network.
